# EUROPÄISCHE PATENTSCHRIFT

(11) **EP 1 692 004 B1**
(45) Veröffentlichungstag und Bekanntmachung des Hinweises auf die Patenterteilung: **23.04.2008**
(21) Anmeldenummer: 04802680.1
(22) Anmeldetag: 02.11.2004
(51) Int. Cl.: B60N 2/02, B60N 2/06, B60N 2/36

(54) **VERFAHREN ZUM VERSTELLEN VON ELEKTROMOTORISCH VERSTELLBAREN KRAFTFAHRZEUGSITZEN**
METHOD FOR DISPLACING ELECTROMOTIVELY ADJUSTABLE MOTOR VEHICLE SEATS
PROCEDE POUR REGLER DES SIEGES DE VEHICULES AUTOMOBILES REGLABLES PAR MOTEUR ELECTRIQUE

(30) Priorität: 14.11.2003 DE 10353809
(43) Veröffentlichungstag der Anmeldung: 23.08.2006
(73) Patentinhaber: Brose Fahrzeugteile GmbH & Co. KG, Coburg, 96450 Coburg (DE)
(72) Erfinder: FLIEGER, Michael, 96231 Bad Staffelstein (DE)
(74) Vertreter: Ninnemann, Detlef
(86) Internationale Anmeldenummer: PCT/DE2004/002452
(87) Internationale Veröffentlichungsnummer: WO 2005/049371

(56) Entgegenhaltungen:
- WO-A-20/04078515
- DE-A1- 10 208 994
- DE-U1- 20 215 321
- FR-A- 2 865 976
- US-A- 4 669 780
- US-A- 5 871 255
- US-A- 5 947 541
- US-A1- 2004 113 410
- US-A1- 2004 160 081
- US-B1- 6 371 558

## Beschreibung

Die Erfindung bezieht sich auf ein Verfahren zum Verstellen von elektromotorisch verstellbaren Kraftfahrzeugsitzen gemäß dem Oberbegriff des Anspruchs 1.

Zur Erhöhung der Variabilität des Innenraums eines Kraftfahrzeugs weisen insbesondere mit einer Heckklappe ausgestattete Kraftfahrzeuge Fondsitze oder Fondsitzbänke auf, deren Rückenlehnen von einer stehenden Position für die Sitzfunktion des Kraftfahrzeugsitzes in eine liegende Position umklappbar sind, so dass der sich an die Rückenlehne des Fondsitzes anschließende Laderaumboden des Kraftfahrzeugs vergrößert werden kann. Zur weiteren Vergrößerung des Laderaumbodens bzw. zur Schaffung großer Liegeflächen können auch die Vordersitze mit einer umklappbaren Rückenlehne ausgestattet werden, so dass ein von der Heckklappe bis zur Frontseite des Fahrzeuginnenraums durchgehender Laderaumboden geschaffen wird.

Bei einer Vergrößerung des Laderaumbodens durch Umklappen der Rückenlehne eines Fondsitzes muss jedoch häufig der vor dem Fondsitz angeordnete Vordersitz hinreichend weit in Längsverstellrichtung vom Fondsitz entfernt werden, damit die Rückenlehne des Fondsitzes beim Umklappen nicht mit dem Vordersitz kollidiert. Ein solches Verfahren ist z.B. aus der US-A-6,371,558 bekannt, die als nächstliegender Stand der Technik angesehen wird. Zusätzlich oder alternativ muss die am Fondsitz angebrachte Kopfstütze eingefahren oder vollständig entfernt werden, um die Rückenlehne des Fondsitzes vollständig in die waagerechte, liegende Position umklappen zu können.

Damit bei entsprechend hohen Rückenlehnen von Fondsitzen ein Umklappen der Rückenlehne des Fondsitzes aus einer stehenden Position in eine liegende Position überhaupt möglich ist, muss zudem ein Mindestabstand zwischen hintereinander angeordneten Vordersitzen und Fondsitzen eingehalten werden.

Aufgabe der vorliegenden Erfindung ist es, ein flexibles Kraftfahrzeugsitzsystem zu schaffen, das eine bedienerfreundliche Vergrößerung des Laderaumbodens durch Umklappen der Rückenlehne von elektromotorisch verstellbaren Kraftfahrzeugsitzen ohne Gefahr einer Kollision zwischen Vordersitz und Fondsitz auch bei minimalen Abständen zwischen hintereinander angeordneten Vorder- und Fondsitzen ermöglicht.

Diese Aufgabe wird erfindungsgemäß durch die Merkmale des Anspruchs 1 gelöst.

Die erfindungsgemäße Lösung schafft ein flexibles Kraftfahrzeugsitzsystem, das eine bedienerfreundliche Vergrößerung des Laderaumbodens durch Umklappen der Rückenlehne der Kraftfahrzeugsitze ermöglicht, ohne dass die Gefahr besteht, dass die Rückenlehne eines Fondsitzes mit der Rückenlehne des davor befindlichen Vordersitzes kollidiert, der Benutzer den Vordersitz zuvor ausreichend weit vom Fondsitz entfernt oder vor dem Umklappen der Rückenlehne eines Fondsitzes die Kopfstütze einfahren oder vollständig entfernen muss. Durch die miteinander gekoppelten Verstellbewegungen des Vordersitzes und des Fondsitzes kann im Bedarfsfall der Abstand zwischen dem Vordersitz und Fondsitz verringert werden, ohne dass dadurch die Vergrößerung des Laderaumbodens beeinträchtigt bzw. auf eine waagerechte Ausrichtung des Laderaumbodens verzichtet werden muss.

Vorzugsweise wird der Vordersitz nach der Ausweichbewegung in die ursprüngliche Position zurückbewegt, so dass nach einer Vergrößerung des Laderaumbodens durch Umklappen der Rückenlehne eines Fondsitzes der Fahrer- oder Beifahrersitz die zuvor auf den Fahrer oder Beifahrer abgestimmte Position einnimmt, ohne dass eine erneute Einstellung der Vordersitze erforderlich ist.

Die erfindungsgemäße Lösung kann sowohl auf vollständig als auch teilweise elektromotorisch verstellbare Kraftfahrzeugsitze angewandt werden. Bei nur teilweise verstellbaren Kraftfahrzeugsitzen, die beispielsweise mit einer elektromotorischen Längsverstelleinrichtung ausgestattet sind, kann der Vordersitz vor oder gleichzeitig mit dem Umklappen der Rückenlehne des Fondsitzes in Längsverstellrichtung vom Fondsitz entfernt werden, indem entweder der Vordersitz in Längsverstellrichtung um einen vorgegebenen Betrag oder um eine vom Abstand zwischen dem Vordersitz und dem Fondsitz abhängige Länge vom Fondsitz entfernt wird.

Bei vollständig elektromotorisch verstellbaren Kraftfahrzeugsitzen kann die Rückenlehne des Vordersitzes vor oder gleichzeitig mit dem Umklappen der Rückenlehne des Fondsitzes in Richtung auf das Sitzteil des Vordersitzes geneigt werden, wobei das Vorklappen der Rückenlehne des Vordersitzes mit einer Längsverstellung des Vordersitzes gekoppelt werden kann. Dabei kann die Rückenlehne des Vordersitzes entweder um einen vorgegebenen Winkel in Richtung auf das Sitzteil des Vordersitzes oder um einen vom Abstand zwischen dem Vordersitz und dem Fondsitz abhängigen Winkel geneigt werden.

Zur Optimierung der Beschaffenheit des durch Umklappen der Rückenlehnen der Kraftfahrzeugsitze vergrößerten Laderaumbodens kann beim zusätzlichen Umklappen der Rückenlehne des Vordersitzes von der stehenden in eine liegende Position der Vordersitz nach der Ausweichbewegung in eine unmittelbar an die Oberkante der umgeklappten Rückenlehne des Fondsitzes angrenzende Position oder der Fondsitz nach der Ausweichbewegung des Vordersitzes in eine unmittelbar an die Hinterkante des Vordersitzes angrenzende Position bewegt werden.

In einer alternativen Ausführungsform kann die Rückwand des Vordersitzes und/oder des Fondsitzes aus einem feststehenden Teil und mindestens einem senkrecht zur Schwenkachse der Rückenlehne gegenüber dem feststehenden Teil in einer zu diesem parallelen Ebene ausziehbar beweglichen Teil besteht, das nach Beendigung der Verstellbewegung des Vordersitzes und/oder Fondsitzes einen Spalt zwischen dem Vordersitz und dem Fondsitz und/oder zum Laderaumboden des Kraftfahrzeugs schließt.

Um ein Einklemmen von Personen bei der Verstellung der Kraftfahrzeugsitze und bei den durchgeführten Ausweichbewegungen zu vermeiden, kann zumindest die Verstelleinrichtung des Vordersitzes mit einer Einklemmschutzvorrichtung versehen werden.

Eine weitere vorteilhafte Ausgestaltung des erfindungsgemäßen Verfahrens besteht darin, die Verstellbewegung der Kraftfahrzeugsitze während und nach der Ausweichbewegung abzubrechen, wenn eine vorgegebene Laststromgrenze der Verstelleinrichtung überschritten wird.

Mehrere in der Zeichnung dargestellte Ausführungsbeispiele sollen das erfindungsgemäße Verfahren und die mit der Anwendung des erfindungsgemäßen Verfahrens erzielbaren Vorteile erläutern. Es zeigen:
- Fig. 1 bis 3: verschiedene Phasen der Positionierung und Ausrichtung eines Vorder-und Fondsitzes mit einer Längsverstellung des Vordersitzes zur Ausführung einer Ausweichbewegung;
- Fig. 4 bis 6: verschiedene Phasen der Positionierung und Ausrichtung eines Vorder-und Fondsitzes mit einer Neigungsverstellung der Rückenlehne des Vordersitzes zur Ausführung einer Ausweichbewegung und
- Fig. 7 und 8: zwei Bewegungsphasen bei in eine Ebene geklappten Rückenlehnen des Vorder- und Fondsitzes zur Herstellung eines lückenlosen Laderaumbodens.

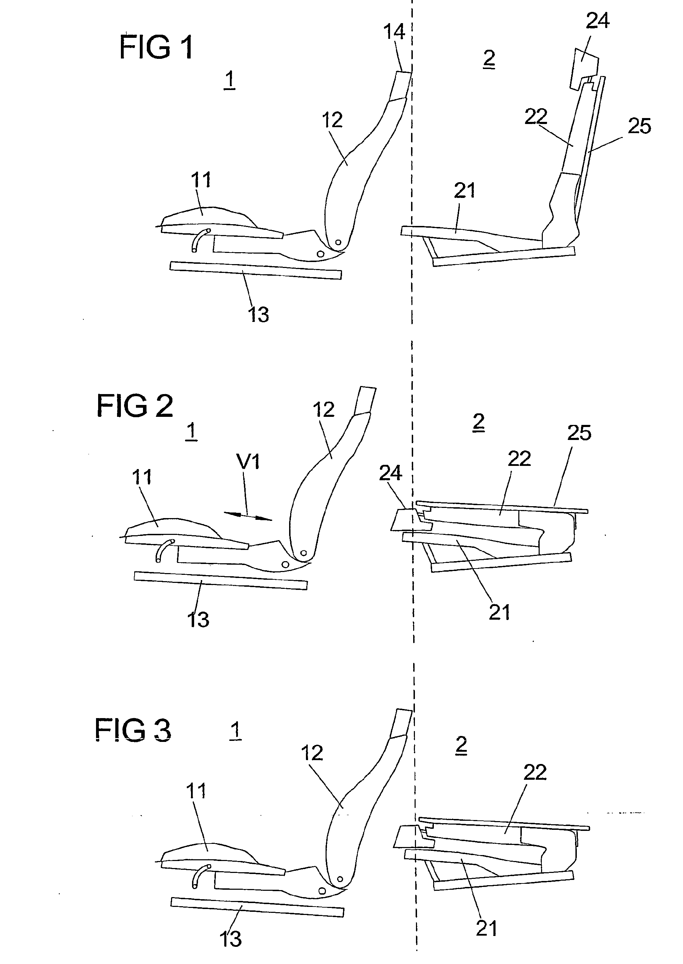

Fig. 1 zeigt in einer Seitenansicht einen Vordersitz 1 und einen dahinter angeordneten Fondsitz 2, die jeweils aus einem Sitzteil 11, 21 und einer Rückenlehne 12, 22 mit an der Oberkante der Rückenlehne 12, 22 angeordneter Kopfstütze 14, 24 bestehen. Der Vordersitz 1 ist auf einer Längsverstelleinrichtung 13 geführt, in der er in Fahrzeuglängsrichtung verstellbar ist, so dass der Abstand zwischen Vordersitz 1 und Fondsitz 2 veränderbar ist.

Die Rückenlehne 22 des Fondsitzes 2 ist über eine Schwenkachse mit dem Sitzteil 21 verbunden, so dass die Rückenlehne 22 aus der in der Fig. 1 dargestellten stehenden Position für eine Sitzfunktiön in die in den Fig. 2 und 3 dargestellte liegende Position zur Vergrößerung eines an die Rückseite des Fondsitzes 2 anschließenden Laderaumbodens und Schaffung einer ebenen Ladefläche mit der Rückwand 25 der Rückenlehne 22 umklappbar ist. Da beim Umklappen der Rückenlehne 22 des Fondsitzes 2 zumindest die an der Rückenlehne 22 des Fondsitzes 2 angeordnete Kopfstütze 24 die gestrichelt dargestellte Begrenzungslinie des Vordersitzes 1 schneidet, käme es beim Umklappen der Rückenlehne 22 des Fondsitzes 2 zu einer Kollision mit dem Vordersitz 1 und damit zu einem Blockieren beim Umklappen der Rückenlehne 22 zur Vergrößerung des Laderaumbodens.

Aus diesem Grunde ist es bislang erforderlich, den Vordersitz 1 in Längsrichtung vom Fondsitz 2 weggerichtet zu verschieben, bei einer schwenkbar am Sitzteil 11 angelenkten Rückenlehne 12 des Vordersitzes 1 die Rückenlehne 12 in Richtung auf das Sitzteil 11 vorzuklappen und/oder die Kopfstütze 24 an der Rückenlehne 22 des Fondsitzes 2 soweit in die Rückenlehne 22 des Fondsitzes 2 einzuschieben bzw. vollständig aus der Rückenlehne 22 zu entfernen, dass ein Umklappen der Rückenlehne 22 in die liegende Position zur Vergrößerung des Laderaumbodens ohne Kollision mit dem Vordersitz 1 möglich ist. Dies erfordert jedoch zusätzliche Maßnahmen der Bedienungsperson vor dem Umklappen der Rückenlehne 22 des Fondsitzes 2 in die liegende Position und es besteht die Gefahr der Beschädigung von Teilen der Kraftfahrzeugsitze 1, 2, wenn das elektromotorische Verstellen der Kraftfahrzeugsitze 1, 2 vor dem Umklappen der Rückenlehne 22 des Fondsitzes 2 vergessen wird.

Erfindungsgemäß erfolgt mit der Abgabe eines Steuerbefehls zum elektromotorischen Umklappen der Rückenlehne 22 des Fondsitzes 2 zunächst eine Ansteuerung der elektromotorischen Verstelleinrichtung des Vordersitzes 1, so dass dieser eine Ausweichbewegung in Form einer Längsverstellbewegung durchführt, die in Fig. 2 durch den Doppelpfeil V1 charakterisiert ist. Bei dieser Ausweichbewegung verfährt der Vordersitz 1 in Längsrichtung auf der Längsverstelleinrichtung 11 zunächst in eine Position, in der er weiter vom Fondsitz 2 als in der Position gemäß Fig. 1 entfernt ist. Nach dem anschließenden Ansteuern der Verstelleinrichtung des Fondsitzes 2 zum Umklappen der Rückenlehne 22 des Fondsitzes 2 in die in Fig. 2 dargestellte liegende Position der Rückenlehne 22 wird die Längsverstelleinrichtung des Vordersitzes 1 erneut angesteuert und der Vordersitz 1 kehrt in seine ursprünglich eingestellte Position zurück.

Fig. 3 zeigt die abschließende Positionierung und Ausrichtung der Kraftfahrzeugsitze 1 und 2, bei denen sich der Vordersitz 1 in der ursprünglichen, in Fig. 1 dargestellten Position befindet und die Rückenlehne 22 des Fondsitzes 2 in eine liegende Position zur Vergrößerung des Laderaumbodens umgeklappt ist.

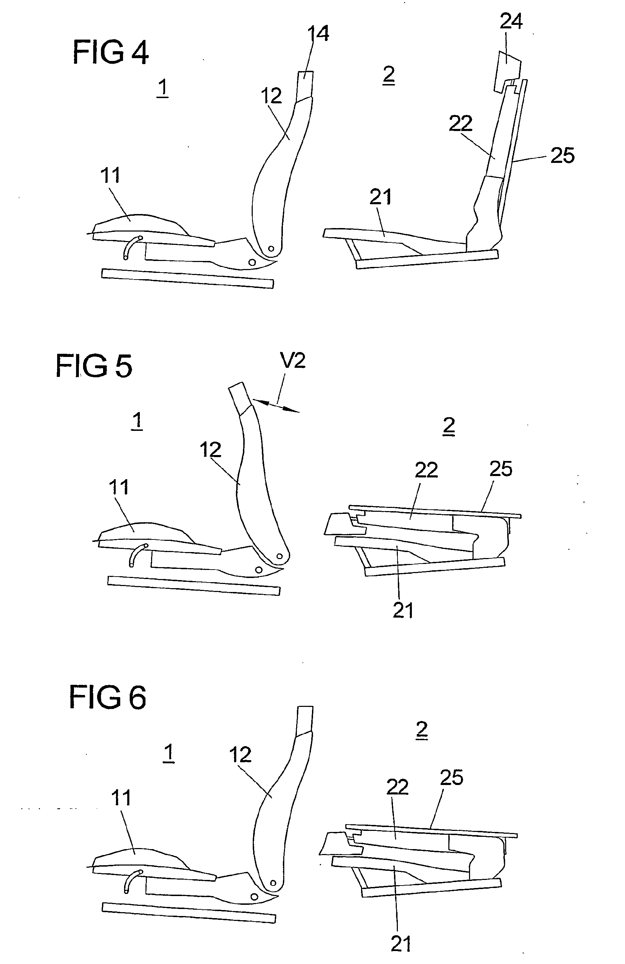

Ist der Vordersitz 1 nicht nur teilweise elektromotorisch verstellbar wie bei dem in den Fig. 1 bis 3 dargestellten Ausführungsbeispiel, sondern vollständig elektromotorisch verstellbar mit einer gegenüber dem Sitzteil 11 verschwenkbaren Rückenlehne 12, so kann alternativ oder zusätzlich das in den Fig. 4 bis 6 dargestellte Steuerungsverfahren zur elektromotorischen Verstellung der Kraftfahrzeugsitze 1, 2 angewandt werden.

Fig. 4 zeigt in Übereinstimmung mit Fig. 1 einen Vordersitz 1 und einen dahinter angeordneten Fondsitz 2 in einer Seitenansicht. Vordersitz 1 und Fondsitz 2 bestehen jeweils aus einem Sitzteil 11, 21 und einer Rückenlehne 12, 22 mit an der Oberkante der Rückenlehne 12, 22 angeordneter Kopfstütze 14, 24. Das Sitzteil 11 des Vordersitzes 1 ist auf einer Längsverstelleinrichtung 13 geführt, so dass der Vordersitz in Fahrzeuglängsrichtung verstellbar ist. Zusätzlich kann die Neigung der über eine Schwenkachse mit dem Sitzteil 21 verbundenen Rückenlehne 12 des Vordersitzes 1 elektromotorisch verstellt und bei Bedarf in die liegende Position umgeklappt werden.

Beim Umklappen der Rückenlehne 22 des Fondsitzes 2 würde zumindest die an der Rückenlehne 22 des Fondsitzes 2 angeordnete Kopfstütze 24 mit der Rückwand des Vordersitzes 1 kollidieren und damit zu einem Blockieren der Verstelleinrichtungen der Kraftfahrzeugsitze 1, 2 führen.

Da in dieser Ausführungsform der Vordersitz 1 zusätzlich mit einer elektromotorischen Verstellung der Neigung der Rückenlehne 12 gegenüber dem Sitzteil 11 des Vordersitzes 1 ausgestattet ist, kann die vor dem Umklappen der Rückenlehne 22 des Fondsitzes 2 erforderliche Ausweichbewegung durch ein Vorklappen der Rückenlehne 12 des Vordersitzes 1 um einen für ein kollisionsfreies Umklappen der Rückenlehne 22 des Fondsitzes 2 erforderlichen Winkel erfolgen.

Fig. 5 zeigt die durch den Doppelpfeil V2 angedeutete Ausweichbewegung der Rückenlehne 12 des Vordersitzes 1, die die Verstelleinrichtung des Vordersitzes 1 vor dem Umklappen der Rückenlehne 22 des Fondsitzes 2 in die in Fig. 5 dargestellte liegende Position des Fondsitzes zur Vergrößerung des Laderaumbodens ausführt. Nach dem Umklappen der Rückenlehne 22 des Fondsitzes 2 in die liegende Position wird die Rückenlehne 11 des Vordersitzes 1 wieder in die ursprüngliche Position, d. h. in die zuvor eingestellte Neigung gegenüber dem Sitzteil 11 des Vordersitzes 1 zurückbewegt, so dass der Fahrer oder Beifahrer die zuvor eingestellte Sitzposition einnimmt, ohne dass ein Nachjustieren der Rückenlehnenneigung erforderlich ist.

Fig. 6 zeigt in Übereinstimmung mit Fig. 3 die nach der Ausweichbewegung der Rückenlehne 12 des Vordersitzes 1, dem Umklappen der Rückenlehne 22 des Fondsitzes 2 und der anschließenden Rückstellung der Rückenlehne 12 des Vordersitzes 1 eingenommene Position und Ausrichtung der Kraftfahrzeugsitze 1, 2.

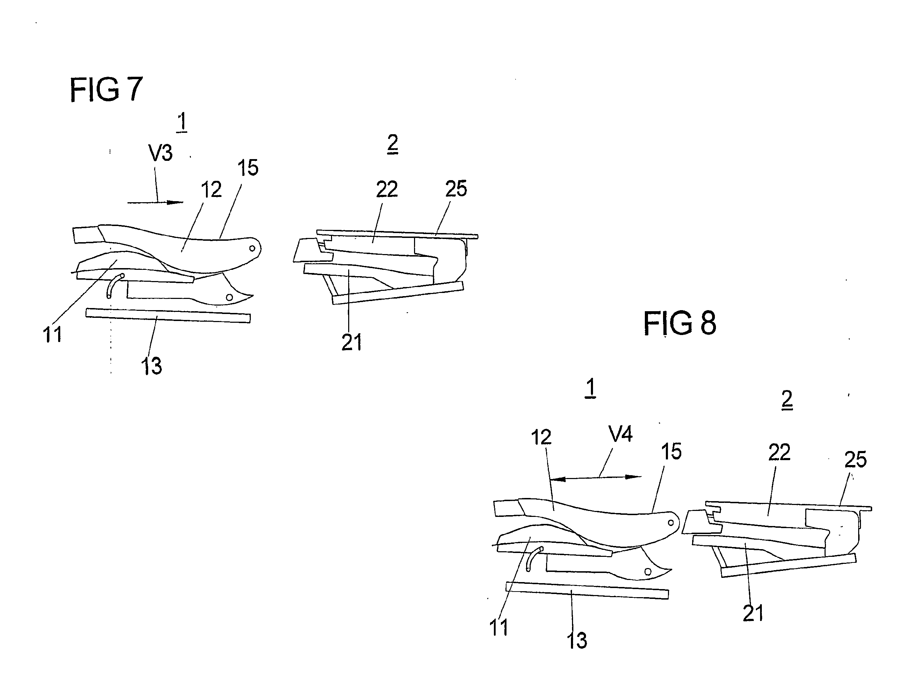

Das in den Fig. 7 und 8 dargestellte Ausführungsbeispiel zeigt die Möglichkeit einer Optimierung der Beschaffenheit eines vergrößerten Laderaumbodens durch die gekoppelte Verstellung eines Vordersitzes 1 und Fondsitzes 2, wenn beispielsweise auch die Rückenlehne 12 eines als Beifahrersitz ausgebildeten Vordersitzes 1 zur Vergrößerung des Laderaumbodens in eine liegende Position umklappbar ist.

In diesem Anwendungsfall führt vor dem Umklappen der Rückenlehne 22 des Fondsitzes 2 von der stehenden Position in die liegende Position der davor befindliche Vordersitz 1 eine der Ausweichbewegungen entsprechend den in den Fig. 1 bis 3 bzw. 4 bis 6 dargestellten beiden Ausführungsbeispielen oder eine aus beiden Ausführungsbeispielen kombinierte Ausweichbewegung durch.

Alternativ kann bei der Eingabe eines Steuerbefehls zum Umklappen sowohl der Rückenlehne 12 des als Beifahrersitz ausgebildeten Vordersitzes 1 als auch zum Umklappen der Rückenlehne 22 des dahinter angeordneten Fondsitzes 2 zunächst die Rückenlehne 12 des Vordersitzes 1 in die in Fig. 7 dargestellte liegende Position umgeklappt und anschließend oder gleichzeitig ein Steuerbefehl an die Lehnenneigungsverstellung des Fondsitzes 2 zum Umklappen der Rückenlehne 22 des Fondsitzes 2 in die liegende Position abgegeben werden, so dass infolge der durch das Umklappen der Rückenlehne 12 des Vordersitzes 1 bewirkte Ausweichbewegung keine Kollisionsgefahr besteht. Anschließend kann ein Steuerbefehl an die Längsverstelleinrichtung des Vordersitzes 1 zum Schließen des Spaltes zwischen der Hinterkante des Vordersitzes 1 und der Vorderkante der umgeklappten Rückenlehne 22 bzw. der Kopfstütze 24 des Fondsitzes 2 mit der Maßgabe abgegeben werden, den Vordersitz 1 so weit in die durch den Pfeil V3 angegebene Richtung auf den Fondsitz 2 zu bewegen, dass der Spalt geschlossen wird.

Wird dagegen zunächst ein Steuerbefehl zum Umklappen der Rückenlehne 22 des Fondsitzes 2 und daran anschließend ein Steuerbefehl zum Umklappen der Rückenlehne 12 des Vordersitzes 1 abgegeben, so wird der Vordersitz 1 in Längsrichtung vom Fondsitz 2 entsprechend der einen Richtung des Pfeiles V4 bewegt und die Rückenlehne 22 des Fondsitzes 2 in die in Fig. 8 dargestellte liegende Position umgeklappt und anschließend ein Steuerbefehl an die Lehnenneigungsverstellung des Vordersitzes 1 zum Umklappen der Rückenlehne 12 des Vordersitzes 1 in die liegende Position abgegeben. Anschließend kann ein Steuerbefehl an die Längsverstelleinrichtung des Vordersitzes 1 zum Schließen des Spaltes zwischen der Hinterkante des Vordersitzes 1 und der Vorderkante der umgeklappten Rückenlehne 22 bzw. der Kopfstütze 24 des Fondsitzes 2 mit der Maßgabe abgegeben werden, den Vordersitz 1 so weit in die durch den Pfeil V4 angegebene Gegenrichtung auf den Fondsitz 2 zu bewegen, dass der Spalt geschlossen wird.

Alternativ oder ergänzend zu der Anschlussbewegung gemäß den Fig. 7 und 8 kann bei einer mehrteiligen Ausbildung der Rückwand 25 des Fondsitzes 2 mit einem feststehenden Teil und einem oder mehreren gegenüber dem feststehenden Teil beweglichen Teilen ein parallel zur Ebene des feststehenden Teils bewegliches Teil über die Kopfstütze 24 des Fondsitzes 2 hinaus bewegt werden und damit den Spalt zwischen Vordersitz 1 und Fondsitz 2 bzw. eine zwischen der Hinterkante des Vordersitzes 1 und der Kopfstütze 24 des Fondsitzes 2 gebildete Lücke schließen. Zusätzlich kann ein in entgegengesetzter Richtung bewegliches Teil parallel zur Ebene des feststehenden Teils ausgefahren werden, um eine zwischen der umgeklappten Rückenlehne 22 des Fondsitzes 2 und dem hinteren Laderaumboden gebildete Lücke zu schließen und eine durchgehend ebene Fläche eines vergrößerten Laderaumbodens zu bilden.

Sämtliche vorstehend beschriebenen Verstell-, Ausweich- und Ausgleichsbewegungen einschließlich der Verstellung einer mehrteiligen Rückwand eines Vorder- und/oder Fondsitzes können vorzugsweise computergesteuert koordiniert werden, so dass lediglich die Eingabe eines einzigen Steuerbefehls erforderlich ist. Die Ausführung des eingegebenen Steuerbefehls kann zur Einhaltung von Sicherheitsbestimmungen an die Belegung von Kraftfahrzeugsitzen oder daran geknüpft werden, ob das Kraftfahrzeug fährf oder sich in einer Parkposition befindet.

Weiterhin können sämtliche oder für Sicherheitsfunktionen wesentliche Teile der Verstelleinrichtungen der Kraftfahrzeugsitze 1, 2 mit einer Einklemmschutzvorrichtung verbunden werden, so dass das Einklemmen von Personen oder Gegenständen wirksam verhindert wird. Ergänzend kann eine Abschaltvorrichtung vorgesehen werden, die beim Überschreiten eines vorgegebenen Grenzwertes eines Laststromes der Elektromotoren der elektromotorischen Verstelleinrichtungen wirksam wird und damit unabhängig von den gesteuerten Verstellbewegungen eine Beschädigung der Verstelleinrichtungen verhindert.

### Bezugszeichenliste

- 1: Vordersitz
- 2: Fondsitz
- 11,21: Sitzteil
- 12, 22: Rückenlehne
- 13: Längsverstelleinrichtung
- 14,24: Kopfstütze
- 25: Rückwand

## Patentansprüche

1. Verfahren zum Verstellen von elektromotorisch verstellbaren Kraftfahrzeugsitzen mit hintereinander angeordnetem Vorder- und Fondsitz (1, 2) mit einem Sitzteil (11, 21) und einer Rückenlehne (12, 22), wobei zumindest die Rückenlehne (22) des Fondsitzes (2) um eine im Bereich ihrer Unterkante befindliche Schwenkachse aus einer stehenden Position in eine liegende Position umklappbar ist, in der sich die Rückwand (25) der Rückenlehne (22) des Fondsitzes (2) etwa in der Ebene eines Laderaumbodens befindet,
**dadurch gekennzeichnet,**
**dass** die Verstellbewegungen des Vordersitzes (1) und des Fondsitzes (2) derart miteinander gekoppelt sind, dass beim Umklappen der Rückenlehne (22) des Fondsitzes (2) aus der stehenden in die liegende Position der Vordersitz (1) eine Ausweichbewegung durchführt.

2. Verfahren nach Anspruch 1, **dadurch gekennzeichnet, dass** der Vordersitz (1) nach der Ausweichbewegung in die ursprüngliche Position bewegt wird.

3. Verfahren nach Anspruch 1 oder 2, **dadurch gekennzeichnet, dass** der Vordersitz (1) vor oder gleichzeitig mit dem Umklappen der Rückenlehne (22) des Fondsitzes (2) in Längsverstellrichtung vom Fondsitz (2) entfernt wird.

4. Verfahren nach Anspruch 3, **dadurch gekennzeichnet, dass** der Vordersitz (1) in Längsverstellrichtung um einen vorgegebenen Betrag vom Fondsitz (2) entfernt wird.

5. Verfahren nach Anspruch 3, **dadurch gekennzeichnet, dass** der Vordersitz (1) um eine vom Abstand zwischen dem Vordersitz (1) und dem Fondsitz (2) abhängige Länge vom Fondsitz (2) entfernt wird.

6. Verfahren nach mindestens einem der voranstehenden Ansprüche, **dadurch gekennzeichnet, dass** die Rückenlehne (12) des Vordersitzes (1) vor oder gleichzeitig mit dem Umklappen der Rückenlehne (22) des Fondsitzes (2) in Richtung auf das Sitzteil (11) des Vordersitzes (1) geneigt wird.

7. Verfahren nach Anspruch 6, **dadurch gekennzeichnet, dass** die Rückenlehne (12) des Vordersitzes (1) um einen vorgegebenen Winkel in Richtung auf das Sitzteil (11) des Vordersitzes (1) geneigt wird.

8. Verfahren nach Anspruch 6, **dadurch gekennzeichnet, dass** die Rückenlehne (12) des Vordersitzes (1) um einen vom Abstand zwischen dem Vordersitz (1) und dem Fondsitz (2) abhängigen Winkel geneigt wird.

9. Verfahren nach mindestens einem der voranstehenden Ansprüche, **dadurch gekennzeichnet, dass** beim zusätzlichen Umklappen der Rückenlehne (12) des Vordersitzes (1) von der stehenden in eine liegende Position der Vordersitz (1) nach der Ausweichbewegung in eine unmittelbar an die Oberkante der umgeklappten Rückenlehne (22) des Fondsitzes (2) angrenzende Position bewegt wird.

10. Verfahren nach mindestens einem der voranstehenden Ansprüche, **dadurch gekennzeichnet, dass** der Fondsitz (2) nach der Ausweichbewegung des Vordersitzes (1) in eine unmittelbar an die Hinterkante des Vordersitzes (1) angrenzende Position bewegt wird.

11. Verfahren nach mindestens einem der voranstehenden Ansprüche, **dadurch gekennzeichnet, dass** die Rückwand (15, 25) des Vordersitzes (1) und/oder des Fondsitzes (2) aus einem feststehenden Teil und mindestens einem senkrecht zur Schwenkachse der Rückenlehne (12, 22) gegenüber dem feststehenden Teil in einer zu diesem parallelen Ebene ausziehbar beweglichen Teil besteht, das nach Beendigung der Verstellbewegung des Vordersitzes (1) und/oder Fondsitzes (2) einen Spalt zwischen dem Vordersitz (1) und dem Fondsitz (2) und/oder zum Laderaumboden des Kraftfahrzeugs schließt.

12. Verfahren nach mindestens einem der voranstehenden Ansprüche, **dadurch gekennzeichnet, dass** die Verstelleinrichtungen des Vordersitzes (1) und/oder Fondsitzes (2) mit einer Einklemmschutzvorrichtung versehen sind.

13. Verfahren nach mindestens einem der voranstehenden Ansprüche, **dadurch gekennzeichnet, dass** die Verstelleinrichtungen des Vordersitzes (1) und/oder Fondsitzes (2) mit einer Einrichtung zur Laststrombegrenzung des Verstellmotors versehen sind. -

## Claims

1. Method for displacing electromotively adjustable motor vehicle seats which have a front and rear seat (1, 2) mounted one behind the other each with a seat part (11, 21) and a backrest (12, 22) wherein at least the backrest (22) of the rear seat (2) is able to fold from an upright position around a pivot axis located in the region of the lower edge into a horizontal position in which the back wall (25) of the backrest (22) of the rear seat (2) is located generally in the plane of a cargo space floor,
**characterised in that**
the adjusting movements of the front seat (1) and the rear seat (2) are coupled with one another so that as the backrest (22) of the rear seat (2) is folded round from the upright into the horizontal position the front seat (1) carries out an avoiding movement.

2. Method according to claim 1, **characterised in that** the front seat (1) after the avoiding movement is moved into the original position.

3. Method according to claim 1 or 2, **characterised in that** the front seat (1) is moved in the longitudinal displacement direction away from the rear seat (2) prior to or at the same time as the backrest (22) of the rear seat (2) is folded over.

4. Method according to claim 3, **characterised in that** the front seat (1) is moved away from the rear seat (2) by a predetermined amount in the longitudinal displacement direction.

5. Method according to claim 3, **characterised in that** the front seat (1) is moved away from the rear seat (3) by a length dependent on the distance between the front seat (1) and rear seat (2).

6. Method according to at least one of the preceding claims, **characterised in that** the backrest (12) of the front seat (1) is inclined towards the seat part (11) of the front seat (1) prior to or at the same time as the backrest (22) of the rear seat (2) is folded over.

7. Method according to claim 6, **characterised in that** the backrest (12) of the front seat (1) is inclined by a predetermined angle towards the seat part (11) of the front seat (1).

8. Method according to claim 6, **characterised in that** the backrest (12) of the front seat (1) is inclined by an angle dependent on the distance between the front seat (1) and rear seat (2).

9. Method according to at least one of the preceding claims, **characterised in that** in the event of additional folding of the backrest (12) of the front seat (1) from the upright into the horizontal position the front seat (1) is moved after the avoiding movement into a position directly adjoining the upper edge of the folded-over backrest (22) of the rear seat (2).

10. Method according to at least one of the preceding claims, **characterised in that** after the avoiding movement of the front seat (1) the rear seat (2) is moved into a position directly adjoining the rear edge of the front seat (1).

11. Method according to one of the preceding claims, **characterised in that** the rear wall (15, 25) of the front seat (1) and/or the rear seat (2) consists of a fixed part and at least a movable part which can extend perpendicular to the pivotal axis of the backrest (12, 22) opposite the fixed part in a plane parallel thereto and which at the completion of the displacement movement of the front seat (1) and/or rear seat (2) closes a gap between the front seat (1) and the rear seat (2) and/or the cargo space floor of the motor vehicle.

12. Method according to at least one of the preceding claims, **characterised in that** the adjusting devices of the front seat (1) and/or rear seat (2) are provided with an anti-jamming protection device.

13. Method according to at least one of the preceding claims, **characterised in that** the adjusting devices of the front seat (1) and/or rear seat (2) are provided with a device for restricting the load current of the adjustment motor.

## Revendications

1. Procédé pour le réglage de sièges de véhicules réglables par moteurs électriques, comprenant un siège avant et un siège arrière (1, 2) agencés l'un derrière l'autre et présentant une partie d'assise (11, 21) et un dossier (12, 22), dans lequel au moins le dossier (22) du siège arrière (2) peut être rabattu autour d'un axe de pivotement situé dans la région de son arête inférieure, depuis une position dressée jusque dans une position couchée dans laquelle la paroi arrière (25) du dossier (22) du siège arrière (2) se trouve approximativement dans le plan du plancher d'un coffre à bagages,
**caractérisé en ce que**
les mouvements de réglage du siège avant (1) et du siège arrière (2) sont couplés les uns aux autres de telle manière que lors du rabattement du dossier (22) du siège arrière (2) depuis la position dressée jusque dans la position couchée, le siège avant (1) exécute un mouvement d'évitement.

2. Procédé selon la revendication 1, **caractérisé en ce que** le siège avant (1) est déplacé jusque dans la position d'origine après le mouvement d'évitement.

3. Procédé selon la revendication 1 ou 2, **caractérisé en ce que** le siège avant (1) est éloigné vis-à-vis du siège arrière (2) dans la direction de réglage longitudinal avant, ou simultanément, avec le rabattement du dossier (22) du siège arrière (2).

4. Procédé selon la revendication 3, **caractérisé en ce que** le siège avant (1) est éloigné d'une distance prédéterminée vis-à-vis du siège arrière (2) dans la direction de réglage longitudinale.

5. Procédé selon la revendication 3, **caractérisé en ce que** le siège avant (1) est éloigné vis-à-vis du siège arrière (2) sur une longueur qui dépend de la distance entre le siège avant (1) et le siège arrière (2).

6. Procédé selon l'une au moins des revendications précédentes, **caractérisé en ce que** le dossier (12) du siège avant (1) est incliné en direction de la partie d'assise (11) du siège avant (1) avant, ou simultanément, avec le rabattement du dossier (22) du siège arrière (2).

7. Procédé selon la revendication 6, **caractérisé en ce que** le dossier (12) du siège avant (1) est incliné en direction de la partie d'assise (11) du siège avant (1) sur un angle prédéterminé.

8. Procédé selon la revendication 6, **caractérisé en ce que** le dossier (12) du siège avant (1) est incliné d'un angle qui dépend de la distance entre le siège avant (1) et le siège arrière (2).

9. Procédé selon l'une au moins des revendications précédentes, **caractérisé en ce que** lors du rabattement supplémentaire du dossier (12) du siège avant (1) depuis la position dressée jusque dans une position couchée, le siège avant (1) est déplacé, après le mouvement d'évitement, jusque dans une position immédiatement adjacente à l'arête supérieure du dossier rabattu (22) du siège arrière (2).

10. Procédé selon l'une au moins des revendications précédentes, **caractérisé en ce que** le siège arrière (2) est déplacé, après le mouvement d'évitement du siège avant (1), jusque dans une position immédiatement adjacente à l'arête arrière du siège avant (1).

11. Procédé selon l'une au moins des revendications précédentes, **caractérisé en ce que** la paroi arrière (15, 25) du siège avant (1) et/ou du siège arrière (2) est composée d'une partie stationnaire et d'au moins une partie mobile extractible perpendiculairement à l'axe de pivotement du dossier (12, 22) par rapport à la partie stationnaire dans un plan parallèle à celle-ci, qui, après terminaison du mouvement de réglage du siège avant (1) et/ou du siège arrière (2), ferme une fente entre le siège avant (1) et le siège arrière (2) et/ou vers le plancher du coffre à bagages du véhicule.

12. Procédé selon l'une au moins des revendications précédentes, **caractérisé en ce que** les dispositifs de réglage du siège avant (1) et/ou du siège arrière (2) sont pourvus d'un dispositif de protection anti-coincement.

13. Procédé selon l'une au moins des revendications précédentes, **caractérisé en ce que** les dispositifs de réglage du siège avant (1) et/ou du siège arrière (2) sont pourvus de moyens pour limiter le courant sous charge du moteur de réglage.
